# EUROPÄISCHE PATENTANMELDUNG

(11) **EP 2 966 756 A1**
(43) Veröffentlichungstag der Anmeldung: **13.01.2016**
(21) Anmeldenummer: 14176458.9
(22) Anmeldetag: 10.07.2014
(51) Int. Cl.: H02K 1/27

(54) **Rotor für eine permanentmagneterregte elektrische Maschine**

(71) Anmelder: Siemens Aktiengesellschaft, 80333 München (DE)
(72) Erfinder: Vollmer, Rolf, 36129 Gersfeld (DE)

(57) **Zusammenfassung**

Die Erfindung betrifft einen Rotor (16) für eine permanentmagneterregte elektrische Maschine (10) mit acht entlang seinem Außenumfang in einer Ringanordnung angebrachten Magnetpolen (18). Aufgabe der Erfindung ist es, die Drehstromwelligkeit des Rotors (16) besonders gering zu halten. Diese Aufgabe wird gelöst durch spezielle Winkelabstände, welche zwischen den jeweils benachbarten Magnetpolen (18) vorliegen.

## Beschreibung

Die vorliegende Erfindung betrifft einen Rotor für eine permanentmagneterregte elektrische Maschine mit acht entlang seinem Außenumfang in einer Ringanordnung angebrachten Magnetpolen. Darüber hinaus umfasst die Erfindung eine elektrische Maschine mit einem Rotor und einem Stator, wobei entlang eines Außenumfangs des Rotors in einer Ringanordnung acht Magnetpole angebracht sind.

Aus der Druckschrift DE 103 03 848 A1 ist eine Drehstrommaschine mit einem Primärteil und einem Sekundärteil bekannt. Dabei weist das Primärteil N Nuten, m elektrische Stränge und konzentrierte oder verteilte Wicklungen und der Sekundärteil magnetische Pole auf. Der Aufbau der Drehstrommaschine, d.h. die entsprechende Anordnung der magnetischen Polpaare und die entsprechende Dimensionierung der Pollücken und Polpaarlücken, dient dazu, die im Betrieb auftretenden Störeffekte wie Rastmoment und Oberwelligkeit der induzierten Spannungen, bestmöglich abzudämpfen. Die Anordnung der Permanentmagnete muss immer paarweise festgelegt sein.

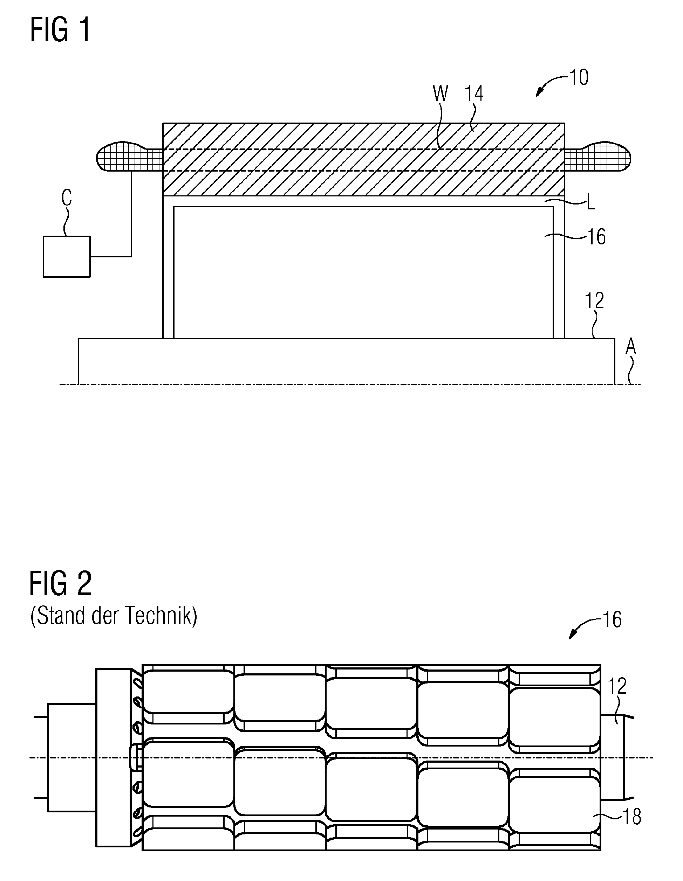

Ein spezieller Rotoraufbau, durch welchen die Störeffekte gering gehalten werden sollen, ist beispielhaft in FIG 2 (Stand der Technik) dargestellt. Aus FIG 2 geht ein Rotor 16 mit gestaffelten magnetischen Polen 18 hervor. Benachbarte Magnetpole 18 haben in Umfangsrichtung pro Staffelscheibe, den gleichen Abstand bzw. die gleiche relative Winkelposition zueinander. Bei einem 8-poligen Rotor haben die Magnete einen Winkelabstand von 45°.

Die Aufgabe der Erfindung besteht darin, die Drehmomentwelligkeit besonders gering zu halten.

Diese Aufgabe wird erfindungsgemäß durch die Gegenstände der unabhängigen Patentansprüche gelöst. Vorteilhafte Weiterbildungen der Erfindung ergeben sich durch die Merkmale der abhängigen Patentansprüche.

Erfindungsgemäß wird diese Aufgabe gelöst durch einen Rotor für eine permanentmagneterregte elektrische Maschine mit acht entlang an seinem Außenumfang in einer Ringanordnung angebrachten Magnetpolen. Dabei liegen zwischen den jeweils benachbarten Magnetpolen Winkelabstände zueinander vor, die aufeinanderfolgend entweder 45, 48.75, 52.5, 41.25, 45, 48.75, 37.5, 41.25 oder 45, 56.25, 45, 41.25, 45, 41.25, 45, 41.25 betragen. Zudem weisen die jeweiligen Winkelabstände einen Toleranzbereich zwischen 0.25° und 0.01° auf. Mit anderen Worten sind die Magnetpole am Umfang des Rotors mit unterschiedlichen relativen Positionswinkeln angeordnet. Unterschiedliche Positionswinkel bzw. Winkelabstände wirken sich dahingehend aus, dass die Abstände, d.h. die Längen eines Kreisbogens, zwischen jeweils zwei in Umfangsrichtung benachbarten Magnetpolen unterschiedlich sind, sofern die Werte der Winkelabstände nicht identisch sind. Die Magnete können dabei beispielsweise so in einer Ringanordnung angeordnet sein, sodass deren Mittelpunkt von einer hypothetischen Geraden geschnitten wird, welche sich ausgehend von einem Mittelpunkt des Rotors zu dem Magnetmittelpunkt erstreckt, wobei zu dieser Geraden in einem jeweiligen Winkelabstand ebenfalls ausgehend von dem Rotormittelpunkt sich eine weitere hypothetische Gerade erstreckt, welche ebenfalls durch den Mittelpunkt eines weiteren benachbarten Magneten verläuft.

Mit Magnetpolen sind hier Permanentmagnete gemeint, wobei die Magnetpole unterschiedliche Polaritäten aufweisen können. Mit Winkelabstand ist hier der Abstand gemeint, welcher sich zwischen zwei Geraden ergibt, wobei sich die Geraden ausgehend von dem Mittelpunkt des Rotors (Rotorachse) radial nach außen bis zum Mittelpunkt der Magnetpole erstrecken. Der Winkelabstand wird dabei in Grad, wie z.B. 45°, gemessen. Mit Toleranzbereich ist hier ein positiver oder negativer Wert einer Abweichung von dem jeweiligen Wert des Winkelabstandes zwischen den jeweils benachbarten Magnetpolen gemeint. Dabei ergibt jedoch die Summe aller acht Werte für die Winkelabstände zwischen den Magnetpolen insgesamt 360°.

Die Winkelabstände und der Toleranzbereich sind mit Dezimalstellen angegeben, wobei die Dezimalstellen durch einen Punkt von der ganzzahligen Zahl abgetrennt dargestellt sind. Durch die entsprechende Anordnung der Magnetpole am Umfang des Rotors ergibt sich der Vorteil, dass Störeffekte, wie beispielsweise schwankende Drehmomente, reduziert werden.

Eine Ausführungsform sieht vor, dass die Magnetpole als Schalenmagnete ausgebildet sind. Schalenmagnete zeichnen sich dadurch aus, dass deren Unterseite, d. h. die Fläche, welche auf dem Blechpaket des Rotors aufliegt, und die Oberseite, d.h. die der Unterseite gegenüberliegende Fläche, derart gewölbt sind, dass deren Wölbungen mit der Wölbung des Kreises mit dem jeweils gleichen radialen Abstand zur Rotationsachse übereinstimmen. Das hat den Vorteil, dass ein schmaler und gleichmäßiger Luftspalt zwischen Magnetpoloberfläche und Statorinnenfläche bzw. Polschuhfläche ermöglicht werden kann und dennoch ein fester Sitz auf dem Blechpaket gewährleistet ist.

In vorteilhafter Weise können axial von einem ersten axialen Ende des Rotors bis zu einem gegenüberliegenden zweiten axialen Ende des Rotors Flusssperren im Blechpaket verlaufen, wobei die Flusssperren radial innenliegend und zentrisch in einem vorgegebenen Abstand zu den Magnetpolen angeordnet sind. Mit "innenliegend" ist hier gemeint, dass die Flusssperren unter, d.h. in Richtung des Rotormittelpunkts, den Magnetpolen angeordnet sind. Mit Flusssperren sind hier Hohlräume gemeint, welche beispielsweise eine zylindrische Form aufweisen können. Das hat den Vorteil, dass der Rotor leichter ist und somit ein besonders geringes Gewicht aufweist. Zudem treten durch das Vorhandensein der Flusssperren keine magnetischen Kurzschlüsse auf. Beides bewirkt, dass beim Betrieb der elektrischen Maschine besonders geringe Verluste auftreten.

Eine weitere Ausführungsform sieht vor, dass eine weitere Ringanordnung aus acht Magnetpolen und korrespondierende Magnetpole aller Ringanordnungen axial fluchtend angeordnet sind. Mit "axial fluchtend" ist hier gemeint, dass die Magnetpole entlang einer Parallelen zur Rotationsachse angeordnet sind. Durch diese Vermeidung von Staffel- oder Schrägungsmaßnahmen der Magnetpole auf dem Rotor können die Magnetpole gerade auf dem Rotor angebracht werden. Das hat den Vorteil, dass eine Magnetisierung auf dem Rotor mit geraden Magnetisierungsjochen möglich ist. Dies vereinfacht die Fertigungstechnik und die Anzahl der Fertigungsmittel.

Zu der Erfindung gehört auch eine elektrische Maschine mit einem Rotor und einem Stator, wobei entlang eines Außenumfangs des Rotors in einer Ringanordnung acht Magnetpole angebracht sind. Zwischen den jeweils benachbarten Magnetpolen liegen Winkelabstände zueinander vor, wobei die Winkelabstände aufeinanderfolgend entweder 45, 48.75, 52.5, 41.25, 45, 48.75, 37.5, 41.25 oder 45, 56.25, 45, 41.25, 45, 41.25, 45, 41.25 betragen. Die jeweiligen Winkelabstände weisen einen Toleranzbereich zwischen 0.25° und 0.01° auf. Durch die möglichen Toleranzen ergibt sich ein besonders glatter Verlauf der Drehmomentwelligkeit.

In vorteilhafter Weise kann der Rotor in einem Stator mit 12 Nuten und 12 Zahnspulen angeordnet sein. Mit anderen Worten ist dem Rotor ein Stator mit 12 Nuten und 12 Zahnspulen zugeordnet. Dabei kann die elektrische Maschine eine Polbedeckung zwischen 0.7 und 0.85 aufweisen. Mit Polbedeckung ist hier das Verhältnis aus dem Winkel der Projektion des Magneten auf die Ständerbohrung zu dem Polwinkel gemeint. Mit anderen Worten ergibt sich die Polbedeckung aus dem Verhältnis des Magnetwinkels zu dem Polwinkel. Dabei kann der Magnetwinkel dadurch bestimmt werden, indem ausgehend von zwei Magnetkanten, d.h. einer ersten und ein zweiten Kante eines Magneten, wobei die zweite Kante in Umfangsrichtung der ersten Kante gegenüberliegt, die Linie der Magnetkante hypothetisch in Richtung des inneren Durchmessers der Ständerbohrung verlängert wird, sodass sich für jeweils eine verlängerte Magnetkantenlinie desselben Magneten jeweils ein Schnittpunkt mit dem inneren Kreis der Ständerbohrung ergibt und ausgehend vom Rotormittelpunkt zwei Geraden zu den Schnittpunkten geführt werden. Der Magnetwinkel entspricht dem Winkel zwischen diesen zwei Geraden. Die horizontale Distanz zwischen den Magnetkanten bzw. der ersten und der zweiten Kante des Magneten stellt die Magnetbreite dar. Der Polwinkel kann mithilfe der Formel Polwinkel = aₚ = 360°/(2*p) berechnet werden. Der Polwinkel wird ebenso wie der Magnetwinkel in Grad angegeben. Im Nenner der oben beschriebenen Formel stellt die Größe p die Anzahl der Polpaare bzw. die Polpaarzahl dar, welche mit 2 multipliziert wird. Beispielsweise entspricht die Polpaarzahl bei einer 8-poligen elektrischen Maschine dem Wert 4. Somit ergibt sich beispielsweise für eine 8-polige elektrische Maschine ein Polwinkel aₚ von 45°.

Die zuvor in Zusammenhang mit dem erfindungsgemäßen Rotor beschriebenen Vorteile und Weiterbildungen können auch auf die elektrische Maschine übertragen werden.

Im Folgenden sind Ausführungsbeispiele der Erfindung beschrieben. Es zeigen:
- FIG 1: eine schematische Darstellung eines Querschnitts einer Ausführungsform der erfindungsgemäßen elektrischen Maschine;
- FIG 2: einen Rotor mit gestaffelten Magneten (Stand der Technik);
- FIG 3: eine schematische Schnittdarstellung eines Querschnitts der elektrischen Maschine von FIG 1 mit einem erfindungsgemäßen Rotor und einem Stator;
- FIG 4: einen Ausschnitt aus FIG 3.

Bei den im Folgenden erläuterten Ausführungsbeispielen handelt es sich um bevorzugte Ausführungsformen der Erfindung. Bei den Ausführungsbeispielen stellen aber die beschriebenen Komponenten der Ausführungsform jeweils einzelne, unabhängig voneinander betrachtende Merkmale der Erfindung dar, welche die Erfindung jeweils auch unabhängig voneinander weiterbilden und damit auch einzeln oder in einer der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In FIG 1 ist ein allgemeiner Aufbau einer elektrischen Maschine dargestellt. In FIG 1 stellt eine Rotationsachse A auch eine Symmetrieachse der Darstellung dar. Die elektrische Maschine 10 umfasst einen Stator 14, in welchem Wicklungen W elektrischer Spulen angeordnet sind, wobei in FIG 1 nur eine der Wicklungen W dargestellt ist. Die Wicklungen W werden durch eine Drehstromquelle C abwechselnd bestromt, wodurch im Inneren des Stators 14 ein magnetisches Drehfeld in einem Luftspalt L der elektrischen Maschine 10 entsteht. Die Drehstromquelle C kann beispielsweise ein Wechselrichter sein oder ein festfrequentes elektrisches Versorgungsnetz.

Im Inneren des Stators 14 befindet sich ein Rotor 16, der drehfest mit einer Welle 12 verbunden ist. Die Welle 12 ist um die Rotationsachse A drehbar und in dem Stator 14 gelagert.

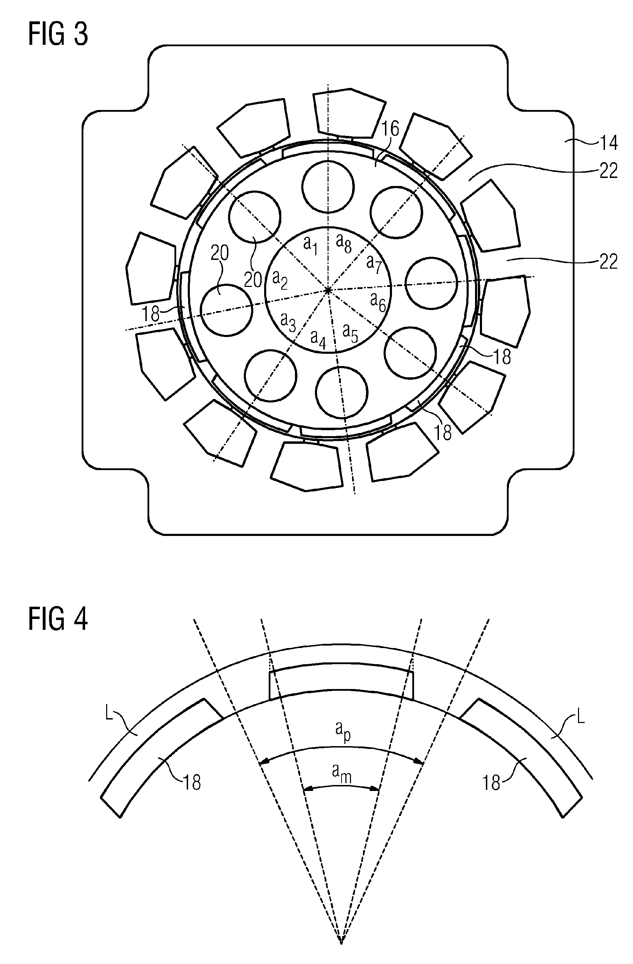

In FIG 3 ist ein Ausschnitt einer elektrischen Maschine 10 und einem Stator 14 und einem Rotor 16 dargestellt. Bei der elektrischen Maschine 10 kann es sich beispielsweise um einen Motor, wie beispielsweise einen PM-Servomotor (PM-Permanentmagnet), oder einen Generator handeln. Der Rotor 16 weist acht entlang seines Außenumfangs in einer Ringanordnung angebrachte Magnetpole 18 auf.

Zwischen jeweils benachbarten Magnetpolen 18 liegen Winkelabstände a1 bis a8 vor, wobei die Winkelabstände aufeinanderfolgend entweder a1 = 45, a2 = 48.75, a3 = 52.5, a4 = 41.25, a5 = 45, a6 = 48.75, a7 = 37.5, a8 = 41.25 oder a1 = 45, a2 = 56.25, a3 = 45, a4 = 41.25, a5 = 45, a6 = 41.25, a7 = 45, a8 = 41.25 betragen. Die jeweiligen Winkelabstände a1 bis a8 können einen Toleranzbereich zwischen 0.25° und 0.01° aufweisen, wobei jedoch die Summe aller Winkelabstände immer 360° ergibt.

Wie FIG 3 zeigt, weist der Rotor 16 Flusssperren 20 auf, wobei die Flusssperren 20 radial innenliegend und zentrisch in einem vorgegebenen Abstand zu den Magnetpolen 18 angeordnet sind. Die Flusssperren können dabei axial von einem ersten axialen Ende des Rotors 16 bis zu einem gegenüberliegenden zweiten axialen Ende des Rotors 16 verlaufen. Die Flusssperren 20 können dabei eine zylindrische bzw. kreisrunde Form aufweisen. Mittelpunkte der Flusssperren 20 können die Winkelabstände a1 bis a8 aufweisen. Dem Rotor 16 ist der Stator 14 mit zwölf Nuten und zwölf Zahnspulen zugeordnet.

FIG 4 stellt eine schematische Darstellung eines Ausschnitts des erfindungsgemäßen Rotors 16 dar. Am Umfang des Rotors 16 sind Magnetpole 18 angeordnet. Zwischen dem Rotor 16 und dem Stator 14 ist ein Luftspalt L ausgebildet. Wie FIG 4 zu entnehmen ist, sind zwei Winkel, nämlich der Magnetwinkel aₘ und der Polwinkel aₚ dargestellt. Der Polwinkel aₚ kann durch die Formel: 360°/(2*p) berechnet werden, wobei im Nenner die Größe p der Anzahl der Polpaare entspricht. Die Magnetbreite ergibt sich durch die Berechnung der horizontalen Distanz zwischen der ersten und der zweiten Magnetkante, welche in Umfangsrichtung des Rotors gegenüber der ersten Kante angeordnet ist. Die elektrische Maschine 10 weist eine Polbedeckung zwischen 0.7 und 0.85 auf. Die Polbedeckung ergibt sich aus dem Verhältnis von Magnetwinkel aₘ zu Polwinkel aₚ (Polbedeckung = aₘ / aₚ).

Insgesamt geht somit eine permanentmagneterregte Maschine mit gedrehten Magnetpolen hervor. Dies betrifft eine 3-phasige, 8-polige und 12-nutige elektrische Maschine mit ungeschrägtem Ständer, Permanentmagneterregung und einfachem Rotoraufbau. Die Drehstromwelligkeit wird so durch einfache Maßnahmen gering gehalten, sodass die Fertigungskosten gering bleiben. Das Ausführungsbeispiel zeigt eine Kombination aus unterschiedlichen Positionswinkeln der Magnetpole am Umfang des Motors mit einer dazugehörigen Polbedeckung (Magnetbreite/Polteilung). Durch die Vermeidung von Staffel- und Schrägungsmaßnahmen auf dem Motor können die Magnete gerade auf dem Rotor aufgebracht werden. Damit ist eine Magnetisierung auf dem Rotor mit geraden Magnetisierungsjochen möglich. Dies vereinfacht die Fertigungstechnik und die Anzahl der Fertigungsmittel. Den ausgeprägtesten technischen Effekt ergibt die Kombination von Teilpolbedeckung und Positionswinkeln. Die Positionswinkel sind durch Drehung einzelner Pole entstanden.

Aufgrund der reduzierten Drehmomentenwelligkeit eignet sich eine derartige elektrische Maschine 10 besonders für Werkzeugmaschinen.

## Patentansprüche

1. Rotor (16) für eine permanentmagneterregte elektrische Maschine (10), mit acht entlang seinem Außenumfang in einer Ringanordnung angebrachten Magnetpolen (18), **dadurch gekennzeichnet , dass** zwischen den jeweils benachbarten Magnetpolen (18) Winkelabstände (a1 bis a8) zueinander vorliegen, wobei die Winkelabstände (a1 bis a8) aufeinanderfolgend entweder 45, 48.75, 52.5, 41.25, 45, 48.75, 37.5, 41.25 oder 45, 56.25, 45, 41.25, 45, 41.25, 45, 41.25 betragen, wobei die jeweiligen Winkelabstände (a1 bis a8) einen Toleranzbereich zwischen 0.25° und 0.01° aufweisen.

2. Rotor (16) nach Anspruch 1, wobei die Magnetpole (18) als Schalenmagnete ausgebildet sind.

3. Rotor (16) nach Anspruch 1 oder 2, wobei axial von einem ersten axialen Ende des Rotors (16) bis zu einem gegenüberliegenden zweiten axialen Ende des Rotors (16) Flusssperren (20) verlaufen, wobei die Flusssperren (20) radial innenliegend und zentrisch in einem vorgegebenen Abstand zu den Magnetpolen (18) angeordnet sind.

4. Rotor (16) nach einem der vorhergehenden Ansprüche, **dadurch gekennzeichnet , dass** zumindest eine weitere Ringanordnung aus acht Magnetpolen (18) und korrespondierende Magnetpole (18) aller Ringanordnungen axial fluchtend angeordnet sind.

5. Elektrische Maschine (10) mit einem Rotor (16) und einem Stator (14), wobei entlang eines Außenumfangs des Rotors (16) in einer Ringanordnung acht Magnetpole (18) angebracht sind, **dadurch gekennzeichnet , dass** zwischen den jeweils benachbarten Magnetpolen (18) Winkelabstände (a1 bis a8) zueinander vorliegen, wobei die Winkelabstände (a1 bis a8) aufeinanderfolgend entweder 45, 48.75, 52.5, 41.25, 45, 48.75, 37.5, 41.25 oder 45, 56.25, 45, 41.25, 45, 41.25, 45, 41.25 betragen, wobei die jeweiligen Winkelabstände (a1 bis a8) einen Toleranzbereich zwischen 0.25° und 0.01° aufweisen.

6. Elektrische Maschine (10) nach Anspruch 5, wobei dem Rotor (16) der Stator (14) mit zwölf Nuten und zwölf Zahnspulen zugeordnet ist, wobei die elektrische Maschine eine Polbedeckung zwischen 0.7 und 0.85 aufweist.

7. Werkzeugmaschine mit einer elektrischen Maschine (10) nach Anspruch 5 oder 6.
